Europäisches Patentamt

European Patent Office

Office européen des brevets

(19)

(11) **EP 1 141 160 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: **99968796.5**

(22) Anmeldetag: **14.12.1999**

(51) Int Cl.⁷: **C09J 123/08**, C09J 11/08

(86) Internationale Anmeldenummer:
**PCT/EP1999/009909**

(87) Internationale Veröffentlichungsnummer:
**WO 2000/039232 (06.07.2000 Gazette 2000/27)**

(54) **WASSERQUELLBARER SCHMELZKLEBSTOFF**

WATER-SWELLABLE HOT-MELT-TYPE ADHESIVE

ADHESIF FUSIBLE GONFLANT A L'EAU

(84) Benannte Vertragsstaaten:
**AT BE CH CY DE DK ES FI FR GB GR IE IT LI LU MC NL PT SE**

(30) Priorität: **23.12.1998 DE 19859728**

(43) Veröffentlichungstag der Anmeldung:
**10.10.2001 Patentblatt 2001/41**

(73) Patentinhaber: **Henkel Kommanditgesellschaft auf Aktien**
**40589 Düsseldorf (DE)**

(72) Erfinder:
• **BUTTERBACH, Rüdiger**
**D-45219 Essen (DE)**
• **MAASSEN, Ulricke**
**D-41468 Neuss (DE)**
• **KOPANNIA, Siegfried**
**D-47809 Krefeld (DE)**

(56) Entgegenhaltungen:
**EP-A- 0 489 967        DE-A- 19 652 762**
**US-A- 5 075 373        US-A- 5 110 605**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen mit Wasser quellbaren Schmelzklebstoff sowie die Verwendung dieses Schmelzklebstoffes zur Herstellung von Kabeln, zu Abdichtzwecken, für allgemeine Montageanwendungen sowie zum Verkleben von non-woven Artikeln.

Wasserabsorbierende bzw. mit Wasser quellbare Zusammensetzungen finden vielfältige Anwendungen zu Abdichtungszwecken, für Montageanwendungen sowie als Bindemittel für non-woven Materialien zur Herstellung von Hygieneprodukten. Wasserabsorbierende und mit Wasser quellbare Zusammensetzungen finden beispielsweise im Rohrleitungsbau Anwendung zur Sicherung der Längswasserdichtheit in mehrschichtigen Rohrkonstruktionen, in der Bauindustrie als Fugendichtungsmassen im Bereich des Bautenschutzes bzw. der Bausanierung. Ein weiteres Anwendungsfeld stellen Kabel dar, die im Erdreich oder unter Wasser verlegt sind. Diese müssen bei der Beschädigung der äußeren Hülle bzw. an den Übergangs- bzw. Verbindungsstellen gegen eindringendes Wasser geschützt werden. Insbesondere Energie-, Telekommunikations- und Lichtwellenleiterkabel sind langlebige Investitionsgüter, deren Betriebssicherheit über einen sehr langen Lebenszeitraum gewährleistet werden muß. Bei Schäden an der Außenisolierung und/oder an fehlerhaften Übergangsstellen dringt Wasser in das Innere derartiger Kabelkonstruktionen ein, diese Wassereinbrüche können zu erheblichen Beschädigungen der Kabel führen. Es kann dabei zu einer schnellen Ausbreitung des Wassers entlang der Kabellängsachse kommen und ein derartig geschädigtes Kabel auf langen Strecken unbrauchbar machen.

Zur Verhinderung des Eindringens von Wasser in Kabelkonstruktionen, Rohrleitungskonstruktionen sowie zum Abdichten im Bautenschutz verwendet man bereits seit geraumer Zeit wasserquellbare Dichtungsmaterialien bzw. Dichtungskonstruktionen. Die JP-A-58-215334 (1983) beschreibt in allgemeiner Form hitzehärtbare Dichtungsmaterialien auf der Basis von Kautschuken und einem wasserquellbaren Polyurethanharz auf der Basis von Ethylenoxidcopolymeren.

Die JP-A-02 155 953 beschreibt salzwasserresistente wasserquellbare Materialien für Dichtungen auf der Basis von vulkanisierbaren Kautschuken und wasserabsorbierenden Harzen aus Acrylsäurederivaten. Diese Materialien müssen in Pressen bei Temperaturen von etwa 160°C etwa 30 Minuten lang vulkanisiert werden.

Die EP-A-0 188 959 beschreibt ein mehrschichtiges Abdichtband bestehend aus einem Träger aus Papier, textilen Materialien oder Kunststoffen, der mit einer Schicht aus einem wasserquellfähigen polymeren Pulver und einem wasserlöslichen Bindemittel sowie ggf. einem Tensid beschichtet ist.

Die US-A-5 020 875 beschreibt Kabelkonstruktionen, bei denen die Schicht, die den Wassereinbruch durch Quellung verhindern soll, aus einem mehrschichtigen Laminat besteht. Dieses Laminat besteht aus zwei Trägerbändern aus hydrophobem Material wie z.B. Polyester. Zwischen diese beiden Trägerbänder ist ein wasserquellbares Polymer oder Copolymer vom Typ der Superabsorber eingelagert.

Die US-A-5 188 883 beschreibt eine mehrschichtige Verbundstruktur aus einem Metallband als einer Schicht und einer Schicht eines quellfähigen Wasser-blockierenden Materials, wobei die beiden Schichten und Oberflächen mit Hilfe eines Klebstoffes verbunden werden.

Die US-A-5 179 611 beschreibt eine Kabelkonstruktion für ein optisches Faserkabel mit einem wasserabsorbierenden Element, das auf einen Träger durch Beschichtung aufgebracht wurde. Hierzu wird eine wasserabsorbierende Zusammensetzung aus einem thermoplastischen Elastomer, einem wasserabsorbierenden Harz sowie einem wasserlöslichen Harz gemischt, diese Mischung wird in einem Lösungsmittel gelöst oder dispergiert und diese Lösung bzw. Suspension wird auf ein flächiges Substrat wie z.B. ein textiles Material oder Papier beschichtet, worauf das Lösungsmittel durch Trocknen abgedampft wird.

Die WO-A-98/27559 beschreibt quellbare Schmelzklebstoffe auf der Basis einer nicht wasserlöslichen Komponente aus einem oder mehreren thermoplastischen Polymeren und einem oder mehreren Harzen mit einer von 0 verschiedenen Verseifungszahl sowie einer in Wasser löslichen oder wasserdispergierbaren Komponente und einer in Wasser quellbaren Komponente aus der Klasse der Superabsorber. Gemäß dieser Schrift eignen sich diese als in Wasser quellbare Schmelzklebstoffe zur Anwendung bei der Herstellung wasserdichter Konstruktionen, insbesondere zur Herstellung längswasserdichter Kabelkonstruktionen. Dabei sollen die Komponenten homogen durchmischt sein, d. h. es sollen keine makroskopischen Inhomogenitäten vorhanden sein. Über die Teilchengröße der in Wasser quellbaren Komponente werden keine Angaben gemacht.

US-A-5110605, US-A-5075373 and EP-A-489976 all describe compositions of superabsorbant polymers of small particle size.

Die quellbaren Schmelzklebstoffe gemäß WO-A-98/27559 zeichnen sich bereits durch eine sehr einfache Handhabbarkeit bei der Herstellung von Längswasser-dichten Kabelkonstruktionen aus, in bezug auf die Geschwindigkeit des Quellens bei Wasserexposition sind die letztgenannten Zusammensetzungen noch verbesserungsbedürftig. Es bestand daher die Aufgabe, einen möglichst einfach zu verarbeitenden Schmelzklebstoff bereitzustellen, der über eine hohe und sehr rasche Quellfähigkeit bei Exposition gegen Wasser aufweist. Gleichzeitig soll dieser Klebstoff bei Raumtemperatur eine geringe Oberflächenklebrigkeit aufweisen.

Die erfindungsgemäße Lösung dieser Aufgabe ist den Ansprüchen zu entnehmen. Sie besteht im wesentlichen in der Bereitstellung eines wasserquellbaren Schmelzklebstoffes, der

a) bis zu 25% eines klebrigmachenden Harzes,
b) ein wasserdispergierbares Polyethylenwachs auf Basis eines Ethylen-Ninylacetat-Copolymers mit einem Molgewicht zwischen 500 und 10.000 (viskosimetrisch bestimmt),
c) ein Ethylenacrylsäureester Copolymer mit einem Alkylacrylatanteil von 15 bis 40 Gew.%,
d) ein wasserlösliches Homo- oder Copolymer, ausgewählt aus Homo- bzw. Copolymeren der Gruppe gebildet durch Polyethylenglykol, Ethylenoxid-/Propylenoxid-Copolymere, Polyvinylmethylether, Polyvinylpyrrolidon, Polyvinylalkohol sowie Copolymere der vorgenannten Monomere mit anderen olefinisch ungesättigten Monomeren,
e) ein pulverförmiges Superabsorberpolymer mit einer mittleren Teilchengröße kleiner als 80 µm aus der Gruppe der Homo- und/oder Copolymeren der (Meth)acrylsäure, (Meth)acrylnitril, (Meth)acrylamid, Vinylacetat, Vinylpyrolidon, Maleinsäure, Maleinsäureanhydrid, Itakonsäure, Itakonsäureanhydrid, Vinylsulfonsäure oder Hydroxyalkylester der vorgenannten Säuren, wobei 0 bis 95 Gew.% der Säuregruppen durch Alkali- oder Amoniumgruppen neutralisiert sein können und diese Polymeren/Copolymeren durch mehrfunktionelle Verbindungen vernetzt sein können.

enthält.

Das klebrigmachende Harz dient dabei als Haftungs- und Verträglichkeitsvermittler, hier lassen sich alle an sich bekannten klebrigmachenden Harze, die für Schmelzkleber Verwendung finden, einsetzen. Insbesondere eignen sich hierfür die diversen Kolophonium-Derivate, d. h. insbesondere die Harzester der Abietinsäure sowie deren Hydrierungsprodukte. Diese Kolophonium-Derivate sind auch als Kolophoniumester diverser mono- und polyfunktioneller Alkohole bekannt. Daneben sind auch Polyterpene sowie Terpenphenolharze als klebrigmachendes Harz einsetzbar.

In Wasser dispergierbare EVA-Wachse sind Polyethylenwachse auf Basis eines Ethylen-/Vinylacetat-Copolymers mit einem Vinylacetatgehalt von bis zu 15 % und Molgewichten zwischen 500 und etwa 10.000 (viskosimetrisch bestimmt). Diese speziellen Polyethylenwachse zeichnen sich durch ihre hydrophilen Eigenschaften aus, sie sind beispielsweise in Wasser dispergierbar.

Als hydrophober Matrix-Bestandteil zum Einbinden der Superabsorber eignen sich flexibilisierende Ethylencopolymere, insbesondere Ethylenalkylacrylatcopolymere mit einem Alkylacrylatanteil von 15 bis 40 Gew.%. Hierbei sind insbesondere die längerkettigen Alkylacrylsäureester als Comonomere geeignet, insbesondere die $C_4$-$C_{12}$ Alkylacrylate. Diese Ethylenalkylacrylatcopolymere weisen üblicherweise einen Erweichungspunkt zwischen 80 und 100°C auf (Methode Ring and Ball ASTM E 28).

Als wasserlösliche Homo- oder Copolymere werden, Polyethylenglykol, Ethylenoxid-/Propylenoxid-Copolymere (entweder als Blockcopolymere oder als statistische Copolymere mit überwiegendem Ethylenoxidanteil), Polyvinylmethylether, Polyvinylpyrrolidon, Polyvinylalkohol sowie Copolymere der vorgenannten Monomere mit anderen olefinisch ungesättigten Monomeren eingesetzt. Diese wasserlöslichen Polymere haben Molekulargewichte zwischen 1000 und etwa 20000, sie können bei Raumtemperatur flüssig oder vorzugsweise bei der Verwendung höherer Molekulargewichte wachsartig fest sein.

Als pulverförmige Superabsorberpolymere eignen sich die an sich bekannten Homo- und/oder Copolymere der Acrylsäure oder Methacrylsäure (kurz (Meth)acrylsäure), (Meth)acrylnitril, (Meth)acrylamid, Vinylacetat, Vinylpyrolidon, Maleinsäure, Maleinsäureanhydrid, Itakonsäure, Itakonsäureanhydrid, Vinylsulfonsäure oder Hydroxyalkylester der vorgenannten Säuren, wobei 0 bis 95 Gew.% der Säuregruppen durch Alkali- oder Amoniumgruppen neutralisiert sind und diese Polymere/Copolymere durch mehrfunktionelle Verbindungen vernetzt sind. Solche Polymeren sind z. B. aus der EP-A-0 700 414 oder EP-A-0 701 587 bekannt. Dort wird offenbart, daß die Polymerpulver eine Korngröße zwischen 90 und 630 µm haben sollen. Erfindungswesentlich ist jedoch, daß die mittlere Teilchengröße der Superabsorber Polymer-Pulver kleiner als 80 µm ist. Besonders bevorzugt sind Teilchengrößenbereiche zwischen 60 µm und 2 µm für das Superabsorberpolymer-Pulver.

Weiterhin können die erfindungsgemäßen Schmelzklebstoffe an sich bekannte handelsübliche Stabilisierungsmittel enthalten, die eine Temperaturstabilität der Formulierungen gewährleisten, hierzu gehören z. B. die üblichen Alterungsschutzmittel auf Basis sterisch gehinderter Phenole.

Besonders bevorzugte quellbare Schmelzklebstoffe enthalten die wesentlichen Bestandteile in folgenden Mengen:

10 bis 25 % klebrigmachendes Harz
20 bis 40 % wasserdispergierbares EVA-Wachs
5 bis 25 Gew.% flexibilisierendes Ethylenacrylsäureester-Copolymer
15 bis 35 Gew.% wasserlösliches Homo- oder Copolymer
20 bis 40 Gew.% Superabsorberpolymer-Pulver.

Die erfindungsgemäßen wasserquellbaren Schmelzklebstoffe eignen sich z.B. als Beschichtung von Metallfolien oder glasfaserverstärkten Verstärkungselementen aus Kunststoff in der Kabelkonstruktion. Eine besonders bevorzugte Anwendung ist z.B. die direkte Beschichtung des zentralen Verstärkungselementes von Lichtwellenleiterkabeln. Dieses Zentralelement kann mit der nicht-oberflächenklebrigen Version des Klebstoffes beschichtet werden und anschließend aufgerollt und zwischengelagert werden. In üblichen Lichtwellenleiterkabeln sind konzentrisch um dieses Zentralelement die einzelnen Lichtwellenleiter angeordnet. Nach Reaktivierung der nicht-oberflächenklebrigen Version des Klebstoffes auf dem Zentralelement können diese Lichtwellenleiter direkt auf dem Zentralelement klebend fixiert werden und können anschließend weitere Fertigungsschritte durchlaufen. Ggf. können die Kunststoffröhrchen (tubes) die den/die Lichtwellenleiter enthalten, ebenfalls auf der Außenseite mit den erfindungsgemäßen Schmelzklebstoff beschichtet sein. Eine nach gängigem Stand der Technik notwendige Umhüllung der Lichtwellenleiter mit einem wasserquellfähigen mehrschichtigen Klebeband oder mehrschichtigem Fließmaterial oder Längswasserabdichtung der Hohlräume zwischen dem Zentralelement und den tubes mit einem Fett (Petrojelly) kann bei Verwendung der erfindungsgemäßen Schmelzklebstoffe entfallen. Man kann in der Kabelkonstruktion die konstruktionsbedingten Hohlräume belassen, da der wasserquellbare Schmelzklebstoff bei Eindringen vom Wasser diese Hohlräume aufgrund des Quellvorganges vollständig ausfüllt und damit eine zuverlässige Längswasser-abdichtung gewährleistet. Diese Konstruktionsart ergibt vereinfachte Verbindungstechnik, die Möglichkeit zu fettfreiem Arbeiten sowie eine signifikante Gewichtsersparnis der Kabelkonstruktion. Außerdem ist eine höhere Produktionsgeschwindigkeit möglich im Vergleich zur Verarbeitung von Quellfließen.

Außer den vorgenannten Anwendungsfeldern zur Herstellung Längswasser-dichter Lichtwellenleiterkabel eignen sich die erfindungsgemäßen wasserquellbaren Schmelzklebstoffe auch für die Sicherung der Längswasserdichtheit von diversen Energie- und Telekommunikationskabeln auf Basis von Kupferleitern.

Weiterhin eignen sich die erfindungsgemäßen wasserquellbaren Schmelzklebstoffe zur Verwendung als Fugendichtungsmassen im Bereich des Bautenschutzes bzw. der Bautensanierung zum Abdichten gegen eindringende Feuchtigkeit oder Wasser in Bauwerke. Ein weiteres Anwendungsfeld ist der Rohrleitungsbau z. B. zur Sicherung der Längswasserdichtheit von mehrschichtigen koaxialen Rohrkonstruktionen. Außerdem eignen sich die erfindungsgemäßen Schmelzklebstoffe als Bindemittel für non-woven-Produkte im Hygienebereich wie z. B.

Babywindeln, Inkontinenzwindeln, Inkontinenzprodukte, Damenbinden, Slipeinlagen oder Bettunterlagen. Weiterhin ist der Einsatz der erfindungsgemäßen Schmelzklebstoffe für recyclingfähige Klebeverbindungen denkbar, bei denen Verklebungen nachträglich (nach Wassereinwirkung) wieder gelöst werden müssen, dies wird durch das Quellen im Wasser sehr stark begünstigt.

Die wasserquellbaren Schmelzklebstoffe können wie folgt hergestellt werden: Klebrigmachendes Harz z. B. Harzester, EVA-Wachs und Ethylenacrylsäureestercopolymer werden bei 110 bis 160°C aufgeschmolzen und homogenisiert. Anschließend wird das oder werden die wasserlöslichen Homo- oder Copolymere zugegeben und homogenisiert. Zuletzt wird das pulverförmige Superabsorber-Polymerpulver eingearbeitet und homogenisiert. Anschließend wird die homogene Schmelze in die entsprechenden Verpackungseinheiten abgelassen und auf Raumtemperatur abgekühlt.

Die erfindungsgemäßen Zusammensetzungen sollen nachfolgend anhand von einigen Beispielen näher erläutert werden, wobei diese Beispiele nur eine sehr enge Auswahl darstellen und den Erfindungsgegenstand in keiner Weise beschränken sollen.

Methode zur Bestimmung der Wasseraufnahme von wasserquellbaren Schmelzklebstoffen nach der Methode des "Tea Bag Testes"

**Probenvorbereitung:**

Aus einem homogen hergestellten Klebstoffmuster wird in einer beheizten Presse bei geeigneter Temperatur eine möglichst blasenfreie Platte von 1 mm Dicke hergestellt. Daraus werden zwei quadratische Prüfkörper mit der Kantenlänge 5 x 5 cm ausgeschnitten, so daß sich Prüfkörper mit einer Oberfläche von 52 cm$^2$ ergeben.

Die Prüfkörper sollten möglichst frisch und wasserfrei sein. Gegebenenfalls werden die Prüfkörper über Nacht im Trockenschrank oder im Exxikator getrocknet.

Die Masse der Probekörper $m_P$ wird festgestellt. Je ein Probekörper wird in ein handelsübliches Teefilter aus Filterpapier gegeben. Dieses wird an einem ebenfalls handelsüblichen Halter aus Kunststoff befestigt (gut geeignet sind z. B. Teesieb und Halter von der Marke Teekanne). Die Masse von Sieb und Halter $m_{SH}$ wird bestimmt.

**Durchführung der Messung:**

Die Probe wird in ein 600 ml Becherglas, welches mit der gewünschten Prüfflüssigkeit gefüllt ist, eingetaucht. Die Prüfflüssigkeit kann vollentsalztes Wasser, Leitungswasser, Salzwasser oder eine andere wäßrige Lösung sein.

Nach exakt einer Minute wird der Halter aus der Flüssigkeit genommen und berührungsfrei in einem größeren Becherglas für 5 Minuten abtropfen gelassen. Danach wird das Gewicht $m_{Ges}$ der von Sieb, Halter, Probe und gebundenem Wasser bestimmt und die Wasseraufnahme des Prüfkörpers wie folgt berechnet:

$$\text{Wasseraufnahme } m_W[\text{g Wasser}] = m_{Ges} - (m_p + m_{SH})$$

Das Quellvermögen des zu prüfenden Produktes kann angegeben werden, indem man die aufgenommene Menge Wasser auf die Oberfläche und die Masse der Probe bezieht:

$$\text{Quellvermögen } [\text{g}/(\text{gxcm}^2)] = m_W / (m_P \times 52)$$

Dieser Wert wird zu Vergleichszwecken auf drei Nachkommastellen genau angegeben.

Anschließend an die 5 Minuten Abtropfzeit und die Gewichtsbestimmung wird die Probe wieder für eine weitere Prüfzeit in die Prüfflüssigkeit gehängt und erneut wie oben beschrieben verfahren.

| Beispiel | 1 | 2 | Vergl. 1 | Vergl. 2 |
|---|---|---|---|---|
| Klebrigmachendes Harz[1] | 19,0 | 10,0 | 10,0 | 19,0 |
| Ethylenacrylsäureester-Copolymer[2] | 15,0 | 10,0 | 10,0 | 15,0 |
| Wasserlösliches Polymer[3] | 20,0 | 22,5 | 22,5 | 20,0 |
| EVA-Wachs[4] | 20,8 | 32,3 | 32,3 | 20,8 |
| Irganox 1010 | 0,2 | 0,2 | 0,2 | 0,2 |
| Superabsorber (> 100 μm) | | | 25,0 | 25,0 |
| Superabsorber (60-2 μm) | 25,0 | 25,0 | | |
| Kontrollsumme | 100,0 | 100,0 | 100,0 | 100,0 |
| | | | | |
| Erweichungspunkt °C | 94,6 | 96,8 | 94,5 | 92,4 |
| Viskosität 140°C [mPa.s] (n=1 upm) | 56000 | 39750 | 44250 | 58750 |
| Viskosität 160°C [mPa.s] (n=2,5upm) | 20300 | 13700 | 28900 | 35000 |
| Homogenität des Quellmittels (15= homog; 0=inhomog.) | 15 | 15 | 8 | 8 |
| Quellverhalten Tea Bag Test: Wasseraufnahme (1 min) [g/(gxcm$^3$)] | 0,047 | 0,031 | 0,030 | 0,023 |
| Quellverhalten Tea Bag Test: Wasseraufnahme (10min) [g/(gxcm$^3$)] | 0,346 | 0,416 | 0,264 | 0,224 |

1) Kolophonium-Pentaerythrit-Ester

2) Ethylen-butylacrylat-Copolymer FP 94°C (Ring & Ball)

3) Polyethylenglykol, MW 12000

4) EVA-Gehalt ca 9 %, MW ca 6500

Sowohl in bezug auf homogene Verteilung des Quellmittels als auch in bezug auf das Quellverhalten im Tea Bag Test nach kurzzeitiger Wasseraufnahme sowie nach längerer Wasseraufnahme weisen die erfindungsgemäßen Schmelzklebstoffe erheblich bessere Eigenschaften auf als die das gröbere Superabsorberpolymerpulver enthaltenden Vergleichsbeispiele.

**Patentansprüche**

1.  Wasserquellbarer Schmelzklebstoff enthaltend mindestens:

    a) bis zu 25% eines klebrigmachenden Harzes,

b) ein wasserdispergierbares Polyethylenwachs auf Basis eines Ethylen-Ninylacetat-Copolymers mit einem Molgewicht zwischen 500 und 10.000 (viskosimetrisch bestimmt),

c) ein Ethylenacrylsäureester Copolymer mit einem Alkylacrylatanteil von 15 bis 40 Gew.% ,

d) ein wasserlösliches Homo- oder Copolymer, ausgewählt aus Homo- bzw. Copolymeren der Gruppe gebildet durch Polyethylenglykol, Ethylenoxid-/Propylenoxid-Copolymere, Polyvinylmethylether, Polyvinylpyrrolidon, Polyvinylalkohol sowie Copolymere der vorgenannten Monomere mit anderen olefinisch ungesättigten Monomeren,

e) ein pulverförmiges Superabsorberpolymer mit einer mittleren Teilchengröße kleiner als 80 µm aus der Gruppe der Homo- und/oder Copolymeren der (Meth)acrylsäure, (Meth)acrylnitril, (Meth)acrylamid, Vinylacetat, Vinylpyrolidon, Maleinsäure, Maleinsäureanhydrid, Itakonsäure, Itakonsäureanhydrid, Vinylsulfonsäure oder Hydroxyalkylester der vorgenannten Säuren, wobei 0 bis 95 Gew.% der Säuregruppen durch Alkali- oder Amoniumgruppen neutralisiert sein können und diese Polymeren/Copolymeren durch mehrfunktionelle Verbindungen vernetzt sein können.

2. Wasserquellbarer Schmelzklebstoff, **dadurch gekennzeichnet, daß** die Teilchengröße des Superabsorbers gemäß 1e) zwischen 60 µm und 2 µm liegt.

3. Wasserquellbarer Schmelzklebstoff nach Anspruch 1 oder 2, **dadurch gekennzeichnet, daß** als klebrigmachendes Harz a) ein Kolophonium-Derivat, ein Polyterpen oder ein Terpenphenolharz verwendet wird.

4. Verwendung der wasserquellbaren Schmelzklebstoffe nach einem der Ansprüche 1 bis 3 zur Sicherung der Längswasserdichtheit von Energie-Telekommunikations- und/oder Lichtwellenleiterkabeln.

5. Verwendung der wasserquellbaren Schmelzklebstoffe nach einem der Ansprüche 1 bis 3 in der Bauindustrie zum Abdichten von Fugen im Bautenschutz oder in der Bautensanierung sowie im Rohrleitungsbau zur Sicherung der Längswasserdichtheit in Mehrschichten-Rohrkonstruktionen.

6. Verwendung der wasserquellbaren Schmelzklebstoffe nach einem der Ansprüche 1 bis 3 als Bindemittel für textile Flächengebilde zum Herstellen von Hygieneprodukten.

7. Verwendung der wasserquellbaren Schmelzklebstoffe nach einem der Ansprüche 1 bis 3 für nachträglich lösbare, recyclingfähige Klebeverbindungen.

**Claims**

1. Water-swellable hot-melt adhesive comprising at least:

a) up to 25% of a tackifying resin,

b) a water-dispersible polyethylene wax based on an ethylene/vinyl acetate copolymer having a molar weight of between 500 and 10 000 (determined by viscometry),

c) an ethylene acrylic ester copolymer having an alkyl acrylate fraction of from 15 to 40 wt.%,

d) a water-soluble homo- or copolymer selected from homopolymers and copolymers from the group consisting of polyethylene glycol, ethylene oxide/propylene oxide copolymers, polyvinyl methyl ether, polyvinylpyrrolidone, polyvinyl alcohol and copolymers of the aforementioned monomers with other olefinically unsaturated monomers,

e) a powderous superabsorbent polymer having an average particle size of less than 80 µm from the group of the homo- and/or copolymers of (meth)acrylic acid, (meth)acrylonitrile, (meth)acrylamide, vinyl acetate, vinylpyrrolidone, maleic acid, maleic anhydride, itaconic acid, itaconic anhydride, vinylsulphonic acid or hydroxyalkyl esters of the aforementioned acids, it being possible for from 0 to 95 wt.% of the acid groups to have been neutralized by alkali metal groups or ammonium groups and for these polymers/copolymers to have been crosslinked by means of polyfunctional compounds.

2. Water-swellable hot-melt adhesive, **characterized in that** the particle size of the superabsorbent from 1e) is between 60 µm and 2 µm.

3. Water-swellable hot-melt adhesive according to Claim 1 or 2, **characterized in that** a colophony derivative, a polyterpene or a terpene phenolic resin is used as tackifying resin a).

**4.** Use of the water-swellable hot-melt adhesives according to one of Claims 1 to 3 for ensuring the longitudinal water impermeability of energy cables, telecommunications cables and/or optical waveguide cables.

**5.** Use of the water-swellable hot-melt adhesives according to one of Claims 1 to 3 in the building industry for sealing joints in building conservation or building restoration and in pipeline construction to ensure longitudinal water impermeability in multi-layer pipe structures.

**6.** Use of the water-swellable hot-melt adhesives according to one of Claims 1 to 3 as binders for textile fabrics for the manufacture of hygiene products.

**7.** Use of the water-swellable hot-melt adhesives according to one of Claims 1 to 3 for subsequently dissoluble, recyclable adhesive bonds.


**Revendications**

**1.** Adhésif thermofusible apte à gonfler dans l'eau contenant au moins :

a) une résine rendant adhésif jusqu' à concurrence de 25 % ;
b) une cire de polyéthylène apte à être dispersée dans l'eau à base 5 d'un copolymère d'éthylène/acétate de vinyle possédant un poids moléculaire entre 500 et 10.000 (déterminé par voie viscosimétrique);
c) un copolymère d'éthylène/acide acrylique possédant une teneur en acrylate d'alkyle de 15 à 40 % en poids;
d) un homopolymère ou un copolymère soluble dans l'eau choisi parmi des homopolymères, respectivement des copolymères choisis parmi le groupe forme par le polyéthylèneglycol, des copolymères d'oxyde d'éthylène/oxyde de propylène, des éthers polyvinylméthyliques, la polyvinylpyrrolidone, l'alcool polyvinylique, ainsi que des copolymères des monomeres mentionnes ci-dessus avec d'autres monomeres à insaturation oléfinique ;
e) un polymère pulvérulent superabsorbant dont la granulométrie moyenne est inférieure à 80 µm, choisi parmi le groupe des homopolymères et/ou des copolymères comprenant l'acide (méth)acrylique, le (méth)acrylonitrile, le (méth)acrylamide, l'acétate de vinyle, la vinylpyrrolidone, l'acide maléique, l'anhydride de l'acide maléique, l'acide itaconique, l'anhydride de l'acide itaconique, l'acide vinylsulfonylique ou encore des esters hydroxyalkyliques des acides précités, les groupes acides pouvant être neutralises, à concurrence de 0 à 95 % en poids, par des groupes alcalins ou ammonium et ces polymères/copolymères pouvant être réticulés via des composes polyfonctionnels.

**2.** Adhésif thermofusible apte à gonfler dans l'eau, **caractérisé en ce que** la granulométrie de l'agent superabsorbant selon 1 e) se situe entre 60 µm et 2 µm.

**3.** Adhésif thermofusible apte à gonfler dans l'eau selon la revendication 1 ou 2, **caractérisé en ce que** la résine a) rendant adhésif est un dérivé du colophane, un polyterpène ou encore une résine terpénique de phénol.

**4.** Utilisation des adhésifs thermofusibles aptes à gonfler dans l'eau selon l'une quelconque des revendications 1 à 3, pour garantir l'étanchéité longitudinale à l'eau de câbles d'énergie, de câbles de télécommunications et/ou de câbles à fibres optiques.

**5.** Utilisation des adhésifs thermofusibles aptes à gonfler dans l'eau selon l'une quelconque des revendications 1 à 3 dans l'industrie de la construction pour l'étanchéisation des joints dans la protection de bâtiments ou dans la réhabilitation de bâtiments, ainsi que dans la construction de canalisations pour garantir l'étanchéité longitudinale à l'eau dans des constructions tubulaires à plusieurs couches.

**6.** Utilisation des adhésifs thermofusibles aptes à gonfler dans !'eau selon l'une quelconque des revendications 1 à 3, à titre de liant pour des produits plats textiles pour la fabrication de produits dans le domaine de l'hygiène.

**7.** Utilisation des adhésifs thermofusibles aptes à gonfler dans l'eau selon l'une quelconque des revendications 1 à 3, pour des composes adhésifs recyclables, qui peuvent être soumis à une dissolution ultérieure.